Europäisches Patentamt

European Patent Office

Office européen des brevets

(11) Veröffentlichungsnummer: **0 271 673**
**A1**

## (12) EUROPÄISCHE PATENTANMELDUNG

(21) Anmeldenummer: 87115552.9

(22) Anmeldetag: 23.10.87

(51) Int. Cl.⁴ **G06K 19/08** , G07F 7/08 , B42D 15/02

(30) Priorität: 13.11.86 CH 45348/86

(43) Veröffentlichungstag der Anmeldung:
**22.06.88 Patentblatt 88/25**

(84) Benannte Vertragsstaaten:
**CH DE FR GB IT LI NL**

(71) Anmelder: **LGZ LANDIS & GYR ZUG AG**

**CH-6301 Zug(CH)**

(72) Erfinder: **Blazsò, Eva**
**Untere Rainstrasse 26**
**CH-6340 Baar(CH)**

(54) **Mehrschichtiges Dokument.**

(57) Ein mehrschichtiges Dokument besteht aus zwei Schutzschichten (1; 2) und einer dazwischenliegenden Informationsschicht (3). Diese Informationsschicht (3) enthält mindestens eine z. B. in einem Muster auf eine Trägerschicht (2) aufgebrachte wasserempfindliche Schicht (6) als Schutz gegen betrügerisches Abformen der darin eingebetteten mikroskopischen optischen Markierungen (4) und mindestens eine optisch aktive Zwischenschicht (5).

**Fig.1**

EP 0 271 673 A1

## Mehrschichtiges Dokument

Die Erfindung bezieht sich auf ein mehrschichtiges Dokument, wie es als Zahlungsmittel, Identitätsausweis, Etikett und dergleichen Verwendung findet, der im Oberbegriff des Anspruchs 1 angegeben Art.

Dokumente dieser Art sind z. B. in CH-PS 588 358 beschrieben. Die Fälschungssicherheit solcher Dokumente hängt weitgehend davon ab, ob die zwischen zwei Schutzschichten eingebetteten optischen Markierungen als Informationsträger zwecks Abformung unbeschädigt freigelegt werden können.

Der Erfindung liegt die Aufgabe zugrunde, die Voraussetzungen bei der Herstellung des Dokumentes zu schaffen, damit eine Abformung der optischen Markierungen verunmöglicht wird, falls die optischen Markierungen tatsächlich freigelegt werden könnten.

Die Lösung dieser Aufgabe gelingt durch die im Kennzeichen des Anspruchs 1 angegebenen Merkmale.

Nachfolgend wird ein Ausführungsbeispiel der Erfindung anhand der Zeichnungen näher beschrieben.

Es zeigen

Fig. 1 den prinzipiellen Aufbau eines Dokumentes im Schnitt,

Fig. 2 das Dokument mit einer dünn aufgetragenen, wasserempfindlichen Schicht im Schnitt,

Fig. 3 das Dokument in einer zweiten Ausführung mit einer zusätzlichen Ausgleichsschicht,

Fig. 4 eine Ansicht des Dokumentes mit weggeschnittener Ecke und

Fig. 5 einen Schnitt durch ein Sicherheitsetikett in einer Ausführung als Heissprägefolie.

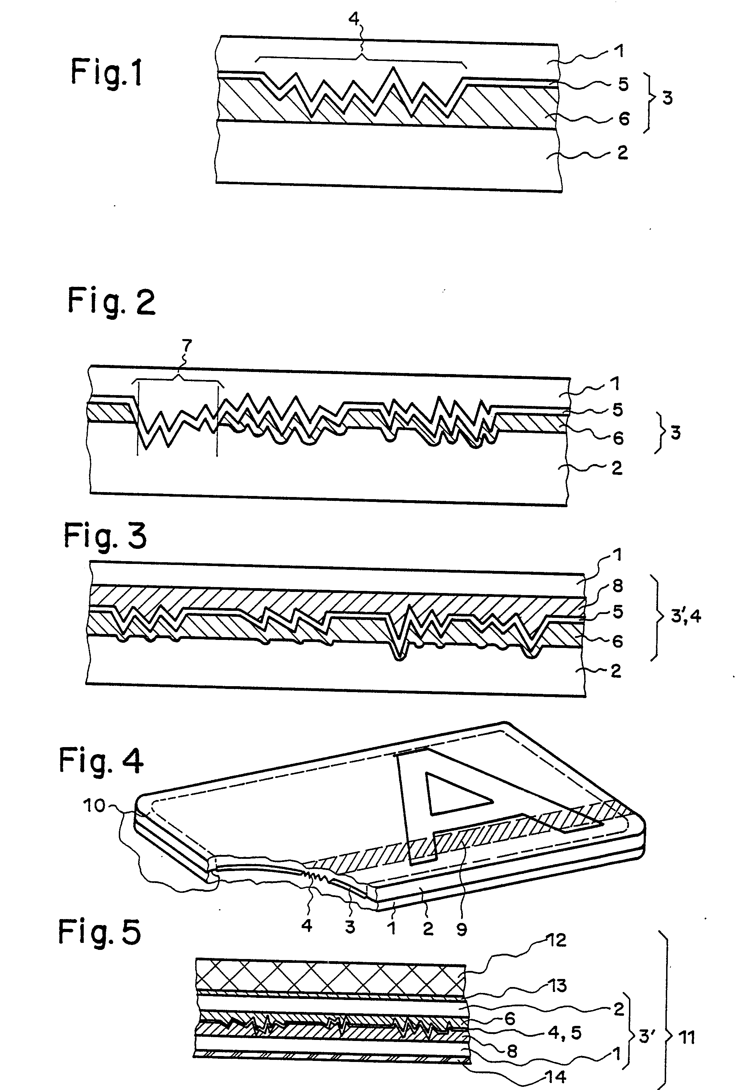

Ein erfindungsgemässes Dokument setzt sich, wie die Figur 1 zeigt, aus einer Deckschicht 1, einer Trägerschicht 2 und einer zwischen der Deckschicht 1 und der Trägerschicht 2 eingeschlossenen Informationsschicht 3 zusammen. Die Deckschicht 1 und die Trägerschicht 2 dienen als Schutzschichten für in der Informationsschicht 3 enthaltene optische Markierungen 4. Diese sind mikroskopische, reliefartige oder ebene Strukturen mit mindestens 200 Linien pro mm und sind visuell oder mit Hilfsmitteln durch die Deckschicht 1 hindurch in Reflexion oder durch die Deckschicht 1, die Trägerschicht 2 und allfällige zusätzliche Schichten hindurch in Transmission lesbar. Die Art der Lesbarkeit bestimmt die notwendigen optischen Eigenschaften der verschiedenen Schichten des Dokumentes, vergleiche CH-PS 588 358.

Die optischen Markierungen 4 enthalten die für das Dokument relevanten Informationen in kodierter Form.

Die Informationsschicht 3 besteht aus mindestens einer optisch aktiven Zwischenschicht 5 und wenigstens einer wasserempfindlichen Schicht 6.

Dieser Aufbau des Dokumentes verhindert ein galvanisches Abformen der optischen Markierungen 4, falls es überhaupt gelingt, die optischen Markierungen 4 unbeschädigt freizulegen. Sobald nämlich die wasserempfindlichen Schichten 6 mit Wasser oder mit wässerigen Lösungen in Kontakt kommen oder einer sehr hohen Luftfeuchtigkeit ausgesetzt sind, verändert sich die Form der eingebetteten optischen Markierungen 4 durch Quell- und Lösungsvorgänge in der wasserempfindlichen Schicht 6, d. h. die in Dokument enthaltenen Informationen werden unlesbar, weil die wasserempfindliche Schicht 6 aufquillt und die optischen Markierungen 4 deformiert oder weil das Auflösen der Schicht 6 die optischen Markierungen 4 zerstört und die optisch wirksame Zwischenschicht 5 zerfallen lässt, da die Zwischenschicht 5 wegen ihrer geringen Dicke von 10 bis 100 nm ohne stützende Unterlage der Schicht 6 mechanisch nicht stabil ist. Die nach dem Entfernen der wasserempfindlichen Schicht 6 verbleibende Prägung der optischen Markierungen 4 liefert auch nach einem erneuten Aufbringen der optisch wirksamen Zwischenschicht 5 ein derart gestörtes Lesesignal, dass es leicht vom ursprünglichen Lesesignal unterschieden werden kann.

Bei der Herstellung des Dokumentes wird zunächst die Trägerschicht 2 des Dokumentes vorteilhaft in einem vorbestimmten Muster, z. B. mittels drucktechnischer Verfahren, die wasserempfindliche Schicht 6 aufgebracht. Die wasserempfindliche Schicht 6 wird vorteilhaft als eine Lösung von wenigstens einem wasserlöslichen Polymer in einem Gemisch von organischen, für das Polymer geeigneten Flüssigkeiten aufgetragen. Für diesen Zweck eignen sich wasserlösliche Polymere wie z. B. Polyvinylpyrrolidon, Polyvinylalkohol, Polyacrylamid, Polyäthylenglykol und wasserlösliche Cellulosearten wie Hydroxypropylcellulose, Carboxymetylcellulose usw. Das Lösungsmittelgemisch und die Konzentration des wasserlöslichen Polymers hängt vom gewählten Auftragsverfahren und vom gewählten Polymer ab. Das vorbestimmte Muster für die wasserempfindliche Schicht 6 kann einen Punkt-; Wellen-oder Linienraster mit 0,1 bis 50 Linien oder Punkten pro mm enthalten. Bei geeigneter Einfärbung ist das Muster visuell oder nur mit Hilfsmitteln durch die in passenden Spektralbereichen transparente Deckschicht 1 oder die Trägerschicht 2 unabhängig von den optischen Markierungen 4 sichtbar. Das Muster und die optischen Markierungen werden vorteilhaft mittels Licht aus zwei geeigneten, sich nicht überlappenden Spektralbereichen ausgelesen. Das Muster kann in einer künstlerischen Gestaltung auch mehrfarbig Hinweise aller Art vermitteln.

Anschliessend wird die so behandelte Seite der Trägerschicht 2 mit mindestens einer optisch aktiven Zwischenschicht 5 in den für die optischen Markierungen 4 vorgesehenen Bereichen bedeckt und die optischen Markierungen 4 z. B. durch ein Prägeverfahren angebracht.

Je nach Dicke und dem Flächendeckungsgrad der aufgedruckten wasserempfindlichen Schicht 6 wird die Trägerschicht 2 mehr oder weniger stark mitgeprägt (Figur 2). Wenn die Dicke der wasserempfindlichen Schicht 6 mindestens doppelt so gross ist wie die maximalen Höhenunterschiede der einzuprägenden Reliefstruktur der optischen Markierungen 4, d. h. der Reliefhöhe, werden an den bedruckten Stellen die Schichten 5 und 6 nur teilweise in die Trägerschicht 2 gepresst, und die Oberfläche der Trägerschicht 2 erhält beim Prägevorgang eine sekundäre Reliefstruktur mit stark verrundeten Kanten und geringeren Höhenunterschieden. Der dadurch bedingte Verlust an Information in der sekundären Reliefstruktur ermöglicht eine sichere Unterscheidung der Auslesesignale von obenbeschriebenen sekundären Reliefstrukturen einer allfällig freigelegten, mit einer neuen optisch aktiven Zwischenschicht 5 bedeckten Trägerschicht 2 gegenüber den Auslesesignalen von den ursprünglichen optischen Markierungen 4. Hingegen sind an nichtbedruckten Stellen 7 die optischen Markierungen 4 direkt in die optisch aktive Zwischenschicht 5 und die Trägerschicht 2 eingeprägt. An diesen Stellen unterscheiden sich die Auslesesignale von der originalen Reliefstruktur nicht. Für wasserempfindliche Schichten 6 mit einer Dicke von weniger als das Doppelte der Reliefhöhe unterscheidet sich die sekundäre Reliefstruktur umso weniger von der originalen Reliefstruktur, je geringer die Dicke der Schicht 6 ist.

Eine auf der der Informationsschicht zugewandten Seite strukturierte Oberfläche der Trägerschicht 2 erhöht die Fälschungssicherheit des Dokumentes weiter. Dies kann durch einfache Massnahmen erreicht werden, von den zwei beispielhaft aufgeführt sind.

In einer Ausführung des Dokumentes wird vor dem Aufbringen der optischen aktiven Zwischenschicht 5 durch eine Spiegelprägung, d. h. Prägen mittels eines ebenen, glattpolierten Stempels, die Rauheit des Musters der wasserempfindlichen Schicht 6 auf der Oberfläche der Trägerschicht 2 eingeebnet. Dabei wird die Oberfläche der Trägerschicht 2 durch das eingepresste Material der wasserempfindlichen Schicht 6 verformt.

In einer anderen Ausführung wird die Oberfläche der Trägerschicht 2 vor dem Aufbringen der wasserempfindlichen Schicht 6 mittels eines Prägevorgangs durch einen Punkt-oder Linienraster von 1 bis 20 Linien oder Punkte pro mm direkt verformt. Durch das Aufbringen der wasserempfindlichen Schicht 6 werden die 0,5 bis 5 μm tiefe Prägespuren in der Oberfläche der Trägerschicht 2 ausgeglättet.

Eine Kombination dieser beiden Ausführungen ist denkbar.

Bei beiden Ausführungen des Dokumentes erstreckt sich das Relief der optischen Markierung 4 über einen Bereich mit mehreren Rasterelementen des Musters der wasserempfindlichen Schicht 6 bzw. des in die Trägerschicht 2 eingeprägten Musters. Nach einem allfälligen Freilegen der Informationsschicht 3 und dem Verlust der Schichten 5 und 6 liegt die sekundäre Reliefstruktur zur Abformung frei. Sie weist aber durch die Spiegelprägung bzw. durch das Prägen der unbedruckten Trägerschicht 2 eine zusätzliche, in der originalen Reliefstruktur nicht vorhandene Welligkeit auf, d. h. das Auslesesignal der sekundären Reliefstruktur unterscheidet sich stark vom Signal der originalen Reliefstruktur.

Für einen optimalen Schutz vor unbefugtem Abformen der optischen Markierungen 4 ist daher ein möglichst feiner Raster beim Aufbringen des Musters der Schicht 6 bzw. beim Prägen der Trägerschicht 2 und ein möglichst hoher Flächendeckungsgrad der Schicht 6, z. B. zwischen 70 und 100%, mit einer Auftragsdicke von 0,5 bis 2 μm, d. h. zwei-bis fünfmal des Betrages der Reliefhöhe der optischen Markierungen 4, anzustreben.

Die anschliessend z. B. mittels eines Druckverfahrens, mittels eines Sprayverfahrens oder als Folie aufgebrachte Deckschicht 1 schützt die optischen Markierungen 4 und die wasserempfindliche Schicht 6 vor Umwelteinflüssen.

In einem bevorzugten Ausführungsbeispiel eines Dokumentes mit in Reflexion lesbaren optischen Markierungen 4 wird die wasserempfindliche Schicht 6 mit einer Auftragsdicke von einem Mikrometer in einem Raster mit Punkten von 5 μm Durchmesser bei einem Flächendeckungsgrad von 80 % auf die Trägerschicht 2 gedruckt. Die Tiefen der Reliefstrukturen zum Einprägen der optischen Markierungen 4 betragen maximal 0,3 μm. Für das Aufbringen der wasserempfindlichen Schicht 4 werden 6 bis 7 Masseteile Polyvinylpyrrolidon in hundert Teilen eines Gemisches bestehend aus 40 Masseteilen Isopropanol, 40 Masseteilen Ethanol, 10 Masseteilen Cyclohexanon und 10 Masseteilen Methylethylketon gelöst. Als optisch aktive Zwischenschicht 5 wird Aluminium ein einer Schichtdicke von 50 nm aufgedampft und anschliessend die optischen Markierungen 4 eingeprägt. Mittels Siebdruck wird eine aminhärtende zweikomponentige Siebdruckfarbe auf Epoxydharzbasis als Deckschicht 1 aufgetragen.

In einer anderen vorteilhaften Ausführungsform werden die optischen Markierungen 4 vor dem Anbringen der Deckschicht 1 mit einer zusätzlichen, gleichmässig aufgetragenen wasserempfindlichen Ausgleichsschicht 8 bedeckt. Eine Informationsschicht 3' besteht in dieser Ausführungsform aus den Schichten 5, 6 und 8, wie dies die Figur 3 zeigt. Für die Ausgleichsschicht 8 wird mit Vorteil das gleiche wasserlösliche Polymer verwendet, allerdings ist eine allfällige Einfärbung auf die optischen Anforderungen beim Lesen der optischen Markierungen 4 abzustimmen. Die zusätzliche Ausgleichsschicht 8 glättet die reliefartigen Strukturen der optischen Markierungen 4 aus und verhindert eine Abformung der optischen Markierungen 4 durch die in flüssiger oder teigiger Form aufgebrachte Deckschicht 1. Bei einem allfälligen Freilegen der Informationsschicht 3' weist daher die abgelöste Deckschicht 1 keine von den optischen Markierungen 4 stammenden Abdrücke auf. Die optischen Markierungen 4 der Informationschicht 3' liegen nicht unmittelbar zur Abformung frei, sondern zuerst muss die an der Oberfläche glatte Ausgleichsschicht 8 entfernt werden, ohne dass beim Ablösen Quell-und Lösungsvorgänge oder mechanische Kräfte die optischen Markierungen 4 zerstören.

Vortielhaft wird für die Ausgleichsschicht 8 eine Auftragsdicke zwischen 0,5 und 2 $\mu$m verwendet.

In der Figur 4 ist die Ansicht einer Ausführungsform des Dokumentes dargestellt. Sie zeigt das durch die Trägerschicht 2 sichtbare Muster der wasserempfindlichen Schicht 6 in einer hier zeichnerisch vereinfachten Form, z.B. als einen Buchstaben "A". Das Muster ist unabhängig von den durch die Deckschicht 1 in Reflexion gelesenen optischen Markierungen 4, die z. B. in einer zur Berandung des Dokumentes parallelen Bahn 9 angeordnet sein können. In der Figur 4 ist die Bahn 9 zur Sichtbarmachung schraffiert und durch zwei parallele, gestrichelte Linien seitlich begrenzt.

Um das seitliche Eindringen von Feuchtigkeit in den Schichtaufbau zu unterbinden, kann auf dem Dokument eine von der Informationsschicht 3 freigehaltene Randzone 10 vorgesehen werden, damit eine wasserunempfindliche Verbindungszone längs der Berandung zwischen der Deckschicht 1 und der Trägerschicht 2 entsteht. In der Figur 4 ist diese Randzone 10 im Schnitt zur Verdeutlichung durch eine weggeschnittene Ecke sichtbar gemacht.

Dokumente dieser Art lassen sich als Sicherheitsetiketten auch auf einem Grundmaterial wie z. B. Papier, Vlies, Metall, Kunststoff usw. befestigen.

Das Dokument wird vorteilhaft als eine Heissprägefolie 11 ausgebildet (Figur 5). Diese Heissprägefolien 11 bestehen aus einer Polyesterfolie 12, einer Trennschicht 13, der Deckschicht 1, der Ausgleichsschicht 8, der wasserempfindlichen Schicht 6 mit den optischen Markierungen 4, der Trägerschicht 2 und einer Klebeschicht 14. Nach dem an sich bekannten Prinzip der Heissprägefolien werden diese Sicherheitsetiketten an die gewünschte Stelle auf dem Grundmaterial angepresst und durch die Polyesterfolie 12 erwärmt. Die Klebeschicht 14 wird durch die Erwärmung aktiviert und verbindet das Sicherheitsetikett dauerhaft mit dem Grundmaterial. Die Trennschicht 13 ermöglicht ein leichtes Ablösen des Etiketts von der Polyesterfolie 12 im erwärmten Zustand.

## Ansprüche

1. Mehrschichtiges Dokument mit mindestens einer optisch wirksamen Informationsschicht, die als Träger von Informationen in Form reliefartiger oder ebener, mikroskopischer Strukturen, optische Markierungen (4) genannt, zwischen zwei Schutzschichten eingeschlossen ist, wobei die eine Schutzschicht eine Deckschicht (1) und die andere Schutzschicht eine Trägerschicht (2) bildet, dadurch gekennzeichnet, dass die die optischen Markierungen (4) enthaltende Informationsschicht (3) aus mindestens einer wasserempfindlichen Schicht (6) und mindestens einer optisch aktiven Zwischenschicht (5) besteht.

2. Dokument nach Anspruch 1, dadurch gekennzeichnet, dass die Zwischenschicht (5) mechanisch nicht stabil ist.

3. Dokument nach Anspruch 1 oder 2, dadurch gekennzeichnet, dass die optischen Markierungen (4) Strukturen von mindestens 200 Linien pro mm aufweisen.

4. Dokument nach Anspruch 1, 2 oder 3, dadurch gekennzeichnet, dass eine wasserempfindliche Ausgleichsschicht (8) zwischen der Deckschicht (1) und der Informationsschicht (3) angeordnet ist.

5. Dokument nach einem der vorangehenden Ansprüche, dadurch gekennzeichnet, dass die wasserempfindliche Schicht (6) ein von den optischen Markierungen (4) unabhängiges Muster mit einem Raster von 0,1 bis 50 Linien oder Punkten pro mm aufweist.

6. Dokument nach Anspruch 5, dadurch gekennzeichnet, dass das Muster einen Flächendeckungsgrad von 70 bis 100 % aufweist.

7. Dokument nach Anspruch 5 oder 6, dadurch gekennzeichnet, dass das Muster der wasserempfindlichen Schicht (6) künstlerisch gestaltet und durch die Trägerschicht (2) erkennbar ist.

8. Dokument nach einem der vorangehenden Ansprüche, dadurch gekennzeichnet, dass die Trägerschicht (2) auf der der Informationsschicht zugewandten Seite eine strukturierte Oberfläche besitzt.

9. Dokument nach einem der vorangehenden Ansprüche, dadurch gekennzeichnet, dass die wasserempfindlichen Schichten (6; 8) zwischen 0,5 und 2 μm dick sind.

10. Dokument nach einem der vorangehenden Ansprüche, dadurch gekennzeichnet, dass das Dokument eine von der Informationsschicht (3) freigehaltene Randzone (10) besitzt.

11. Dokument nach einem der vorangehenden Ansprüche, dadurch gekennzeichnet, dass die wasserempfindlichen Schichten (6; 8) Polymere sind.

12. Dokument nach einem der vorangehenden Ansprüche, dadurch gekennzeichnet, dass das Dokument als ein Sicherheitsetikett in Form einer Heissprägefolie (11) ausgebildet ist.

Fig.1

Fig. 2

Fig. 3

Fig. 4

Fig. 5

Europäisches
Patentamt

**EUROPÄISCHER RECHERCHENBERICHT**

Nummer der Anmeldung

EP 87 11 5552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 440 653 (G.H. MARX)<br>* Seite 2, Absatz 5; Seite 3, Absatz 2 *<br>--- | 1 | G 06 K 19/08<br>G 07 F 7/08<br>B 42 D 15/02 |
| A | US-A-2 780 015 (N. WHITEHEAD)<br>* Spalte 2, Zeilen 26-37,67-72 *<br>--- | 1,11 | |
| A | GB-A-2 136 352 (HOLLUSIONS LTD)<br>* Zusammenfassung *<br>--- | 1,2 | |
| A | DE-A-3 442 795 (RUBENBERGER)<br>* Zusammenfassung *<br>--- | 1 | |
| A | EP-A-0 167 864 (DAUSMANN)<br>* Zusammenfassung *<br>--- | 1 | |
| D,A | US-A-4 119 361 (D.L. GREENAWAY)<br>* Zusammenfassung *<br>--- | 1,3,4 | |
| A | US-A-4 150 781 (D. SILVERMAN)<br>* Zusammenfassung *<br>--- | 5 | |
| A | FR-A-2 349 866 (MINNESOTA MINING)<br>* Seite 4, Zeilen 2-11; Seite 10, Zeile 35 - Seite 11, Zeile 5 *<br>--- | 7,12 | RECHERCHIERTE SACHGEBIETE (Int. Cl.4)<br><br>G 06 K<br>B 42 D<br>G 07 F |
| A | FR-A-2 170 768 (TRANSACTION TECH.)<br>* Figuren 8,9 *<br>----- | 10 | |

Der vorliegende Recherchenbericht wurde für alle Patentansprüche erstellt

| Recherchenort | Abschlußdatum der Recherche | Prüfer |
|---|---|---|
| DEN HAAG | 18-02-1988 | HENROTTE I. |